# EUROPEAN PATENT SPECIFICATION

(11) **EP 1 292 137 B1**
(45) Date of publication and mention of the grant of the patent: **28.11.2007**
(21) Application number: 01922017.7
(22) Date of filing: 23.04.2001
(51) Int. Cl.: H04N 5/761, H04N 7/025, G11B 15/02

(54) **BROADCAST PROGRAM RECORDING PROGRAMMING DEVICE AND METHOD**
PROGRAMMIERGERÄT UND -VERFAHREN FÜR RUNDSENDEPROGRAMMAUFZEICHNUNG
PROCEDE ET DISPOSITIF DE PROGRAMMATION D'ENREGISTREMENT D'EMISSIONS TELEVISEES

(30) Priority: 24.04.2000 JP 2000122702
(43) Date of publication of application: 12.03.2003
(73) Proprietor: MATSUSHITA ELECTRIC INDUSTRIAL CO., LTD, Kadoma-shi, Osaka 571-8501 (JP)
(72) Inventor: TAKAHASHI, Ken'ichiro, Ibaraki-shi, Osaka 567-0026 (JP)
(74) Representative: Grünecker, Kinkeldey, Stockmair & Schwanhäusser Anwaltssozietät
(86) International application number: PCT/JP2001/003472
(87) International publication number: WO 2001/082601

(56) References cited:
- DE-A1- 19 909 522
- JP-A- 2000 041 211
- JP-A- 2000 175 113
- JP-A- 2000 312 323
- JP-U- 2 012 732
- PATENT ABSTRACTS OF JAPAN vol. 1998, no. 05, 30 April 1998 (1998-04-30) & JP 10 021601 A (SONY CORP), 23 January 1998 (1998-01-23)
- PATENT ABSTRACTS OF JAPAN vol. 2000, no. 02, 29 February 2000 (2000-02-29) & JP 11 313280 A (SANYO ELECTRIC CO LTD), 9 November 1999 (1999-11-09)

## Description

### TECHNICAL FIELD

The present invention relates to a program reserving apparatus, method, and program for reserving a broadcast program.

### BACKGROUND ART

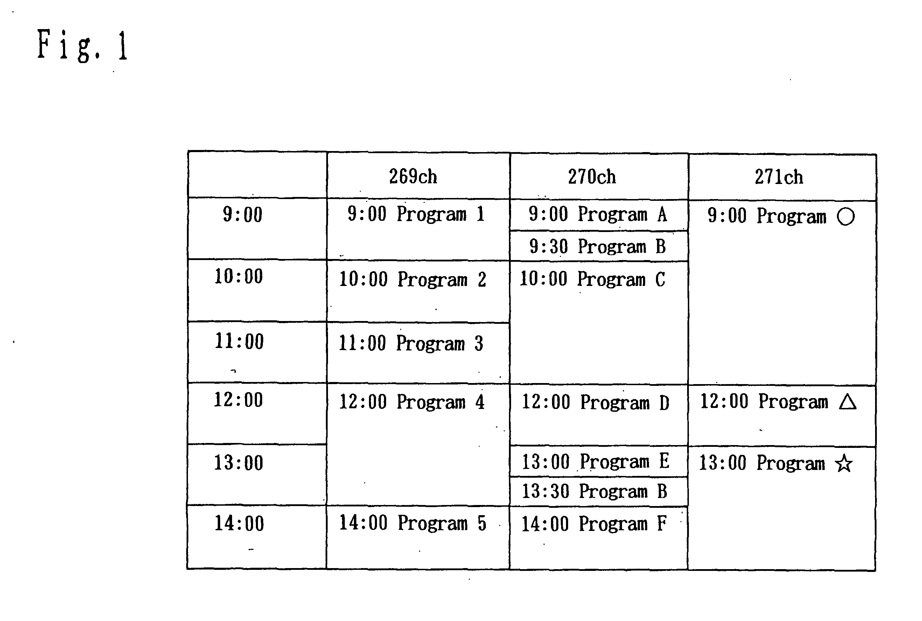

In television broadcasting, available is a service for providing the title and the time of day of each scheduled program. Further, available is a receiving apparatus for receiving the information distributed by the service and thereby displaying an electronic program table (an example of the table is shown in Figure 1) in a form similar to that in newspapers. In such a receiving apparatus, a cursor can be moved on the electronic program table on the screen by means of a remote controller, thereby a desired program can be reserved. When the scheduled time of the reserved program comes, the reserved program is automatically received and output to a television receiver, a video deck, and the like. Some apparatuses have a function of linking and starting the video deck, and the like, at the scheduled time of the reserved program.

Nevertheless, in some cases, reception failure can occur due to a rain and the like during the broadcast of the reserved program. This causes the trouble that all or part of the reserved program is not successfully received. If such failure occurs when the reserved program is being recorded, the situation that the reserved program has not been successfully recorded cannot be recognized until the recorded tape is reproduced later.

That is, there has been the problem in that in case of recording a reserved program the situation that the reserved program has not been successfully recorded cannot be recognized even if reception failure has occurred during the broadcast of the reserved program until the recorded tape is reproduced later.

### DISCLOSURE OF INVENTION

In a broadcasting system such as digital broadcasting capable of providing a large number of channels, a certain kind of channel provides the same program or similar programs repeatedly. In this case, if the situation that reception failure has occurred during the reception of the reserved program was recognized, the same or a similar program broadcast later can be received and recorded.

With considering the above-mentioned problem, an object of the invention is to provide a program reserving apparatus, method, and program in which when reception failure has occurred during the reception of a reserved program, the occurrence of the reception failure is detected, thereby the same or a similar program is found out and reserved in the electronic program table, and thereby the program having suffered the reception failure is received again automatically.

To solve the above problem, the present invention is a program reserving apparatus corresponding to Claim 1.

DE 199 09 522 A1 discloses program recording reservation apparatus for an audio and video data broadcast system which has a program reservation information updating unit which changes time of a program reservation of a program that overlaps program information recorded by a program information recorder.

### BRIEF DESCRIPTION OF THE DRAWINGS

Figure 1 shows an example of an electronic program table.
Figure 2 shows an example of the configuration of a program reserving apparatus according to Embodiments 1 and 3 of the invention.
Figure 3 shows an example of the key configuration in specifying means of a program reserving apparatus according to Embodiments 1-4 of the invention.
Figure 4 shows an example of program information according to Embodiments 1-4 of the invention.
Figure 5 shows an example of program information according to Embodiments 1-4 of the invention.
Figure 6 shows an example of the configuration of a program reserving apparatus according to Embodiments 2 and 4 of the invention.
Figure 7 is a flowchart showing the procedure in a program reserving method according to Embodiments 3 and 4 of the invention.

### [Description of the Reference Numerals]

- 201: Specifying means
- 202: Storing means
- 203: Detecting means
- 204: Searching means
- 205: Reservation information controlling means
- 206: Receiving means
- 207: Transport decoding means
- 208: Audio-video decoding means
- 601: Specifying means
- 602: Storing means
- 603: Detecting means
- 604: Searching means
- 605: Reservation information controlling means
- 606: Receiving means
- 607: Transport decoding means
- 608: Audio-video decoding means
- 609: Linkage controlling means

### BEST MODE FOR CARRYING OUT THE INVENTION

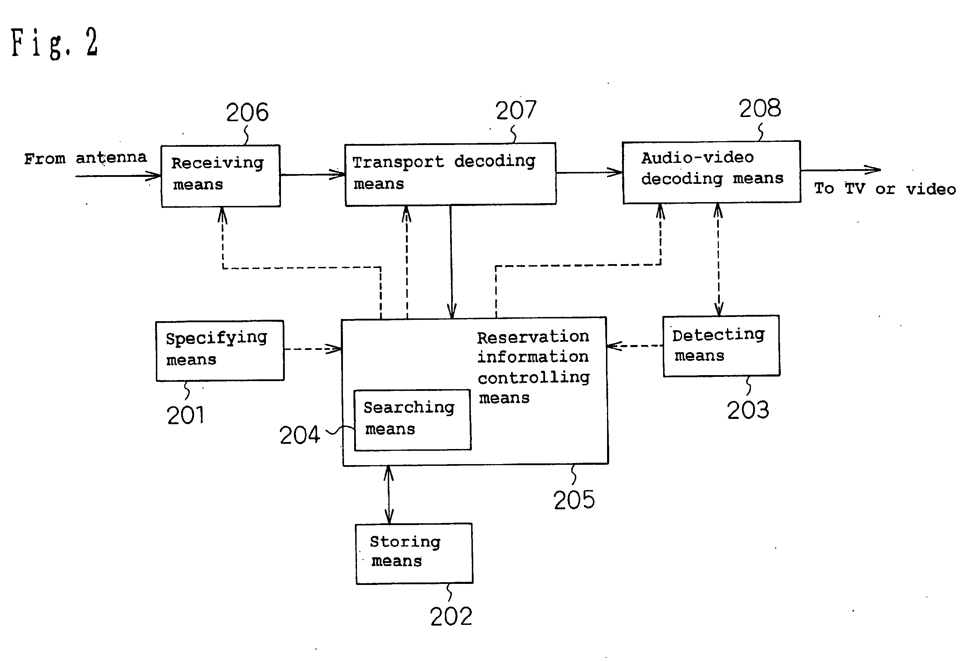

Figure 2 shows an example of the configuration of a program reserving apparatus and method according to the present embodiment of the invention. The program reserving apparatus comprises: specifying means 201 of specifying a program to be reserved; storing means 202 of storing the program reservation information of the specified program; reception failure detecting means 203 of detecting reception failure during the reception of the reserved program; searching means 204 of searching program information for a program, using the title of the program as a search key; and reservation information controlling means 205 of controlling the program reservation information.

Numeral 206 indicates receiving means of demodulating a signal input from an antenna and converting the signal into a transport stream in MPEG-2. The transport stream is assumed to include program information composed of the scheduled time and the titles of the broadcast programs, in addition to the audio-video data. That is, necessary information, such as the scheduled time and the titles of thebroadcastprograms, isextractedfromanEPG (electronic program guide) attached to the transport stream by a broadcast station, and thereby such program information can be obtained.

Numeral 207 indicates transport decoding means of extracting necessaryinformationfrom the transport stream. Numeral 208 indicates audio-video decoding means of decoding the audio-video data of a program, and of generating the screen image of an electronic program table.

The specifying means 201 is composed of a remote control unit or an operation panel provided in the main body of the apparatus, and comprises keys for cursor movement and determination. The output of the audio-video decoding means 208 is connected to a television receiver or a video deck. A user watches the electronic program table (an example of the table is shown in Figure 1) displayed on the television screen, and thereby reserves a desired program using the specifying means 201.

The receiving means 206 detects and demodulates the RF signal input from the antenna. After carrying out error correction, the receiving means 206 converts the signal into a transport stream, and then provides the transport stream to the transport decoding means 207.

The transport decoding means 207 extracts the the program information and audio-video data which are necessary for the reproduction of the program, from the transport stream outputted from the receiving means 206, provides the audio-video data to the audio-video decoding means 208, and provides the program information to the storing means 202.

The audio-video decodingmeans 208 has some functions; one is to decode the audio-video data provided from the transport decoding means 207, generate and output an audio-video signal acceptable by the television receiver, the video deck, and the like. Other function is to generate and output a video signal from the information on the screen of the electronic program table provided from the reservation information controlling means 205. And another function is, in case of the audio-video data from the transport decodingmeans 207 is interrupted, or the decoding is failed owing to an error contained in the audio-video data causing to disturb the audio-video output, to notify the occurrence of the disturbance to the outside.

The reception failure detecting means 203 monitors the audio-video decodingmeans 208. Thus, when the decoding of the audio-video data is failed in the audio-video decoding means 208, the reception failure detecting means 203 notifies the occurrence of the failure to the reservation information controlling means 205.

The reservation information controlling means 205 receives the program information provided from the transport decoding means 207, and then stores the information into the storing means 202. And, the reservation information controlling means 205 has a function that generates the screen image data of an electronic program table as shown in Figure 1 receiving the input from the specifying means 201 and reading out the program information stored in the storing means 202, and then provides the data to the audio-video decoding means 208 to display the electronic program table on the screen. Furthermore, the reservationinformation controlling means 205 has another function that instructs the receiving means 206, the transport decoding means 207, and the audio-video decoding means 208 to receive the program the user has reserved on the basis of the program reservation information included in the program information. The reservation information controlling means 205 comprises, in the inside, searching means 204 of searching the program information stored in the storing means 202, using the title of a program as a search key.

The storing means 202 is composed of a memory such as a DRAM, and thereby stores the program information provided from the reservation information controlling means 205.

### (Embodiment 1)

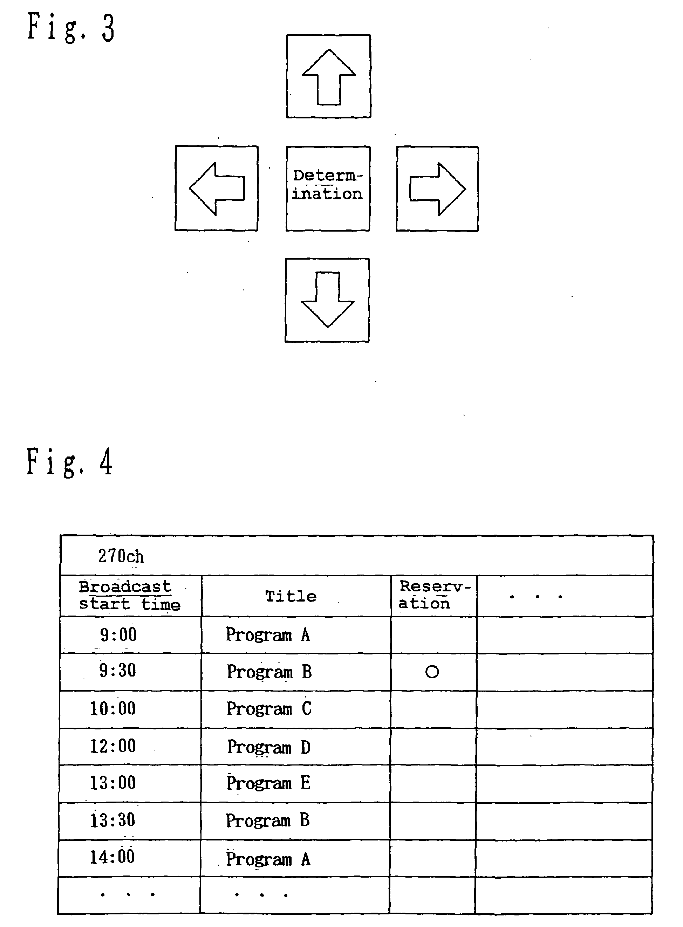

An embodiment of a program reserving apparatus according to Claim 1 of the invention is described below with reference to Figure 2. Numeral 201 indicates specifying means that comprises at least certain keys, such as cursor movement keys and a determination key shown in Figure 3, necessary for selecting a desired program in the electronic program table. Alternatively, the cursor movement keys and the determination key may be provided in a remote control unit or in the panel in the main body of the receiver.

Numeral 203 indicates detecting means of detecting the occurrence of failure in audio-video decoding means 208 during the reception. The detecting means 203 monitors a signal that will indicate the occurrence of failure in the decoding of the audio-video data in the audio-video decoding means 208, continuously during the reception of the reserved program. When detecting the occurrence of failure, the detecting means 203 notifies the occurrence to the reservation information controlling means 205.

Numeral 202 indicates storingmeans of storingprogram information. The storing means 202 is composed of a memory such as a DRAM, and thereby stores the program information for a certain time such as a week. As shown in Figure 4, the program information includes at least a channel number, broadcast start time, program title, and reservation status information. As described above, the program information is generated by extracting necessary information from the EPG (electronic program guide) that is attached to the transport stream and then broadcast together with the program by a broadcast station.

Numeral 205 indicates reservation information controlling means and has a function that stores the program information provided from the transport decoding means 207 into the storing means 202. Further, the reservation information controllingmeans 205 has another function that instructs the receiving means 206, the transport decoding means 207 , and the audio-video decoding means 208 to receive and output the channel of the reserved program when the broadcast start time of the reserved program comes, referring to the reservation status information, the broadcast start time, and the channel number included in the program information stored in the storing means 202.

Further, the reservation information controlling means 205 comprises searchingmeans 204, which has a function to search for a program from the program information stored in the storing means 202 using the title of the program as a search key. The searching means 204 is invoked by the reservation information controlling means 205, when the detecting means 203 has detected reception failure during the reception of the reserved program. When invoked, the searching means 204 searches for a program having the same title as that of the presently received program, from among the programs to be broadcast later than the presently received program. When a program having the same title is found out, the reservation information controlling means 205 operates the reservation status information of the program founded in the storing means 202, and thereby reserves the program.

In this configuration, for example, in the case that the storing means 202 stores the program information shown in Figure 4, when the time 9:30 comes, the reservation information controlling means 205 instructs the receiving means 206, the transport decoding means 207, and the audio-video decoding means 208 so that a reserved program B is received and output to a television receiver or the like, and the reception of the reserved program begins. Once the reception of the program B begins, the detecting means 203 starts to monitor the audio-video decoding means 208, and thereby waits for the occurrence of failure during the decoding of the audio-video data in the audio-video decoding means 208.

Methods of detecting the occurrence of failure include a method based on an interrupt from the audio-video decoding means 208, and a method based on a change in the valve of a register indicating the status of the audio-video decoding means 208.

Here, in the method based on an interrupt, the audio-video decoding means 208 notifies the occurrence of failure in dealing with the audio-video decoding to the detecting means 203 by means of an interrupt. On the other hand, in the method based on a change in the valve of the register, the detecting means 203 monitors the valve of the register indicating the status of the audio-video decoding means 208, and thereby detects the occurrence of an error during the decoding.

When the detecting means 203 detects the occurrence of failure during the decoding of the audio-video data, the detection result is notified to the reservation information controlling means 205. Then, the reservation information controlling means 205 invokes the searching means 204. The searching means 204 refers to the program information stored in the storing means 202, and thereby searches for a program having the same title (program B, in this example) as that of the presently received program, from among the programs to be broadcast on the same channel as that of the presently received program and in a timing later than that of the presently received program.

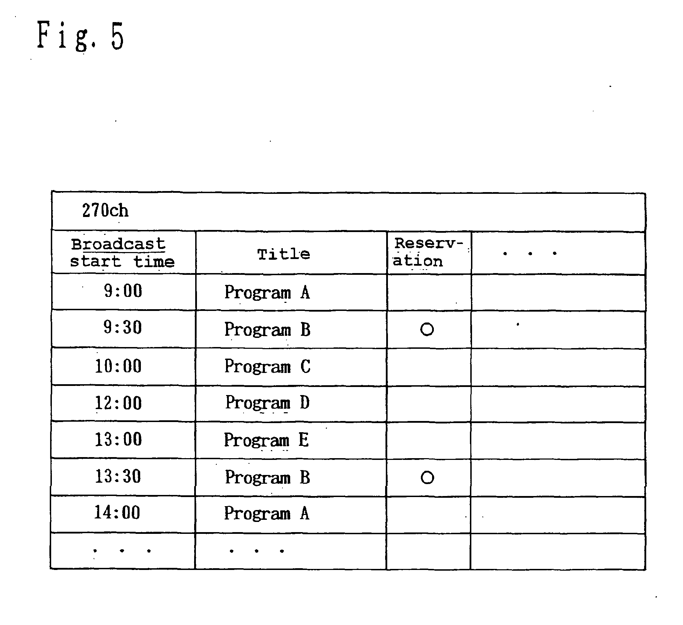

As a result of the search, when a program having the same title is found out (program B to be broadcast at 13 : 30, in this example), the reservation information controlling means 205 sets the reservation status information of the found program, and thereby reserves the program. According to this operation, the program information is changed into that shown in Figure 5, thereby the reception of the program B begins at 13:30. As such, in case of the occurrence of failure during the reception of a reserved program, when the same program is broadcast again, the program can be automatically re-received.

The operation of setting the reservation status information and thereby carrying out reservation according to the present embodiment is an example of the operation of registering the above-described program reservation information according to the invention. The operation of reserving a program according to the present embodiment is an example of the operation of reserving a program according to the invention. The program reservation information according to the present embodiment is an example of the program reservation information according to the invention.

Further, the operation of reserving a program according to the invention is not restricted to the operation of reserving a program for reception according to the present embodiment, and may be the operation of reserving a program for recording.

### (Embodiment 2)

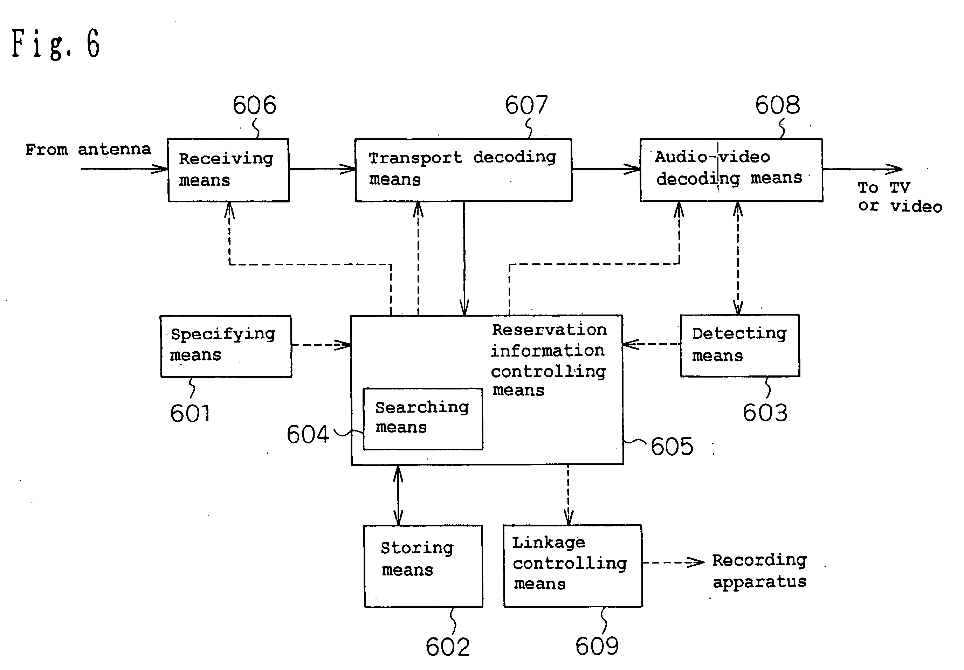

An embodiment of a program reserving apparatus according to Claim 2 of the invention is described below with reference to Figure 6. The program reserving apparatus according to Claim 2 is a program reserving apparatus according to Claim 1 further comprising linkage controlling means 609. The operation of the specifying means 601, the storingmeans 602 , the detectingmeans 603 , and the searching means 604 is the same as that in Embodiment 1. In addition to the operation in Embodiment 1, the reservation information controlling means 605 instructs the linkage controlling means 609 to start recording at the start of reception of the reserved program. In response to the instruction, the linkage controlling means 609 causes a recording apparatus, such as a video deck connected thereto, to begin to record the program. On completion of the broadcast of the reserved program, the linkage controlling means 609 causes the recording apparatus to terminate the recording operation.

As such, in case of the occurrence of failure during the reception of a reserved program, when the same program is broadcast again, the program can be automatically re-received and re-recorded.

### (Embodiment 3)

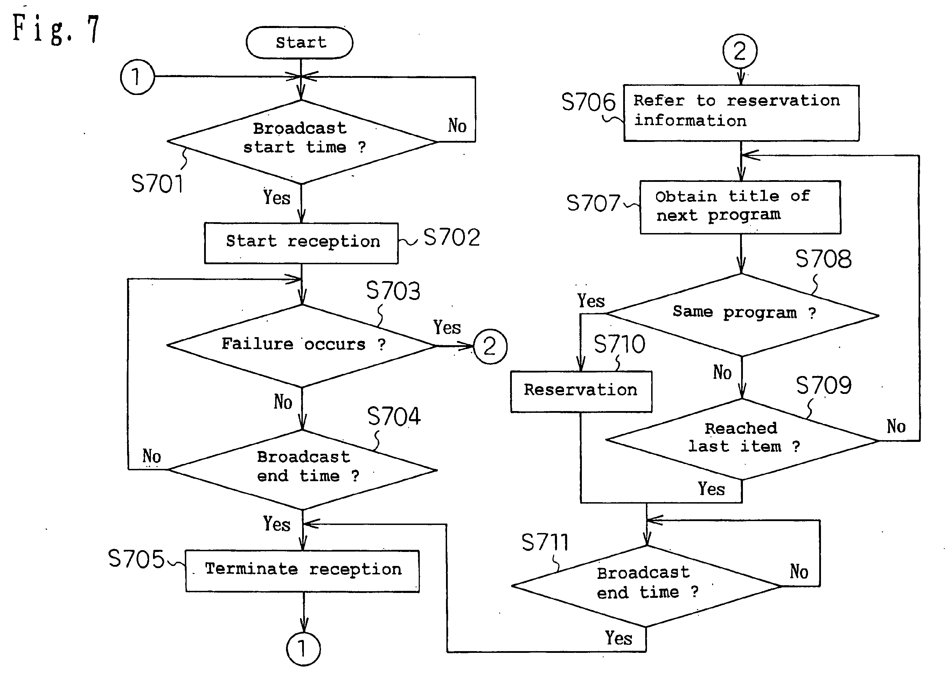

A program reception reserving method according to Claim 3 of the invention is described below with reference to a configuration diagram of Figure 2 and a flowchart of Figure 7. For example, in case that the storing means 202 stores the program information shown in Figure 4, the procedure waits for the broadcast start time 9 : 30 of the reserved program (S701). When the broadcast start time 9 : 30 of the reserved program comes, an instruction is issued to the receiving means 206, the transport decoding means 207, and the audio-video decoding means 208, thereby the reserved program is received (S702). Then, the audio-video decoding means 208 is monitored, whereby the occurrence of failure during the audio-video decoding is checked (S703). When the occurrence of any failure is detected, the reservation information controlling means 205 refers to the program information stored in the storing means 202 (S706), and thereby obtains the title of the program next to the presently received program (S707). As a result of comparing the title of the next program with the title of the presently received program (S708), when the two titles are the same, the reservation information controlling means 205 operates the reservation status information of the program, and thereby reserves the program (S710). When the two titles are different from each other, the title of every subsequent program is compared sequentially up to the last one stored in the storing means 202 in order to find out a program having the same title (S709, S707, S708) . In case that the occurrence of failure is detected, the procedure waits for the broadcast end time of the program (S711). In contrast, in case that the occurrence of failure is not yet detected, the occurrence of failure is continuously monitored until the broadcast end time of the program (S704, S703). At the broadcast end time of the program, the reception is terminated (S705) . Then, the procedure waits for the broadcast start time of the next reserved program (S701). The procedure repeats these steps. As such, in case of the occurrence of failure during the reception of a reserved program, when the same program is broadcast again, the program can be automatically re-received.

### (Embodiment 4)

A program recording reserving method according to Claim 4 of the invention is a program reception reserving method according to Claim 3 further comprising the operation of linkage of a recording apparatus such as a video deck. That is, the step of causing the recording apparatus such as a video deck to begin to record the program is added to the reception start step (S702) in Figure 7. Further, the step of causing the recording apparatus to terminate the recording operation is added to the reception termination step (S705) . As such, in case of the occurrence of failure during the reception of a reserved program, when the same program is broadcast again, the program can be automatically re-received and re-recorded.

### (Embodiment 5)

A recording medium according to the present embodiment is composed of a recording medium, such as a magnetic medium, an optical medium, a magneto-optical medium, and a semiconductor device, which carries a computer readable program for causing a computer to execute the program reserving method according to Claim 3.

### (Embodiment 6)

A recording medium according to the present embodiment is composed of a recording medium, such as a magnetic medium, an optical medium, a magneto-optical medium, and a semiconductor device, which carries a computer readable program for causing a computer to execute the program reserving method according to Claim 4.

The above-mentioned embodiments.have been described for the case that the program information is generated by extracting necessary information from an EPG (electronic program guide) attached to the transport stream provided from a broadcast station. However, the invention is not restricted to this. In place of the EPG (electronic program guide) attached to the transport stream provided from a broadcast station, an EPG (electronic program guide) distributed through the Internet may be used.
Alternatively, an EPG (electronic program guide) recorded on a transportable medium such as a CD-ROM for distribution may be used. Further, instead of extracting necessary information for the program information from such an EPG (electronic program guide), the EPG (electronic program guide) itself may be used as the program information.

The above-mentioned embodiments have been described for the case that when the detecting means 203 has detected the occurrence of failure during the decoding of the audio-video data, a program having the same title as that of the presently received program is searched for from among the programs to be broadcast on the same channel as that of the presently received program and in a timing later than that of the presently received program. However, the invention is not restricted to this. That is, when the detecting means 203 has detected the occurrence of failure during the decoding of the audio-video data, a program having the same title as that of the presently received program may be searched for from among the programs to be broadcast on a channel different from that of the presently received program and in a timing later than that of the presently received program. For example, it becomes effective to search for another channel than the channel which is receiving with a service called NVOD (near video on demand), that is, a service that broadcasts one program on several channels at different time for each by staggering its start time, for example, by 30 minutes so that it becomes possible to watch the program anytime from the beginning.

The above-mentioned embodiments have been described for the case that when the occurrence of failure is detected, the procedure waits for the broadcast end time of the program (S711). However, the invention is not restricted to this. For example, in case of a program in the NVOD service, reception may be terminated at the time when the occurrence of failure is detected, despite that the broadcast of the program still continues. Then, the same program to be broadcast on a different channel may be received.

In case of the occurrence of failure during the reception of a reserved program as described in Embodiments 1 and 3, when the same program as that having suffered the failure is to be automatically re-recorded, the linkage controlling means 609 makes it possible to record the same program deleting or after deleted the part of the program having suffered the failure from the recording medium of the recording apparatus. That is, in place of the control such that the second program is recorded in the recording area following that of the first program having suffered the failure, the linkage controlling means 609 may control such that the part of the first program having suffered the failure is deleted and then the secondprogram is recorded in the recording area where the first program having suffered the failure had been recorded, or alternatively such that the secondprogram is overwritten on the first programhaving suffered the failure. Such an approach permits efficient use of the recording medium that records a program of the recording apparatus.

The recording apparatus according to the present embodiments may be composed of an apparatus recording on a tape medium such as D-VHS, VCR, and the like, that is, a recording apparatus for accessing sequentially. Alternatively, the recording apparatus may be composed of an apparatus recording on a disk such as a hard disk apparatus and an optical disk apparatus , that is, a recording apparatus capable of accessing randomly a disk medium. The operation that the second program is overwritten on the first program is used in the sequential access recording apparatus. In contrast, the operation that the position of the first program is deleted and then the second program is recorded in the recording area where the first program had been recorded is used in the random access recording apparatus.

In case of the occurrence of failure during the reception of a reserved program as described in Embodiments 1 and 3, when the same program as that having suffered the failure is thereby to be automatically re-recorded, the linkage controlling means 609 may control such that the program having suffered the failure is also recorded in the recording apparatus as far as the capacity of the recording apparatus permits. According to this control, in spite of the reception failure in a part of the desired program, the linkage controlling means 609 controls the recording apparatus to record the program having suffered the failure as far as the capacity permits. Accordingly, when the program is re-produced by the recording apparatus, the program can be watched normally except for the part of the reception failure. This approach ensures the user to watch at least the part of the program received successfully, and thereby is useful in case of a program that the user never wants to miss.

In such a case, when a second program corresponding to the first program having suffered the failure is automatically reserved and, without the occurrence of failure being detected while the second program automatically reserved has being received, the second program has been recorded on the recording apparatus, the linkage controlling means 609 may control the recording apparatus to delete the first program that corresponds to the second program automatically reserved and has suffered the failure after recording the second program automatically reserved on the recording apparatus. As such, when the recording of the second program has been completed in the recording apparatus without the occurrence of failure, the first program having suffered the failure is unnecessary. Thus, deletion of the first program having suffered the failure permits efficient use of the recording medium of the recording apparatus.

When a second program corresponding to the first program having suffered the failure is automatically reserved, and when the occurrence of failure is detected during the reception of the second reserved program, and further when the searching means 204 or 604 shows that no other program exists corresponding to the second reserved program, the linkage controlling means 609 may control the recording apparatus to record also the second reserved program as far as the capacity of the recording apparatus permits. After that, the linkage controlling means 609 may control the recording apparatus to keep one program having suffered the least failure and then delete the other program(s). According to this approach, when the occurrence of failure is detected during the reception of a reserved program, and when the occurrence of failure is detected during the reception of all subsequently reserved programs, and even when no other program exists corresponding to the reserved program, the linkage controlling means 609 controls the recording apparatus to keep one program having suffered the least failure and then delete the other program(s). This permits efficient use of the recording medium of the recording apparatus, and at the same time, ensures the user to watch the program having suffered the least failure.

The program reserving apparatus according to the present embodiments may serve as a television receiver for receiving broadcast waves, such as satellite broadcasting, ground wave broadcasting, and CATV broadcasting, and thereby outputting the video and the voice through a monitor and a speaker, respectively. Further, the program reserving apparatus may serve as a recording apparatus of D-VHS and VCR, or alternatively as a personal computer with television tuner. The program reserving apparatus may be integrated in a one-piece unit, or alternatively composed of a plurality of component units.

The program reserving apparatus according to the present embodiments has been described for the case that the program and the EPG are broadcast and received in MPEG-2 transport stream. However, the invention is not restricted to this. The program reserving apparatus may be applied to digital broadcasting of another scheme. For example, the program reserving apparatus may be used in the reservation of a program in analog broadcasting. In case of analog broadcasting, the above-mentioned EPG (electronic program guide) is generally provided during the vertical blanking interval of the analog broadcast. In case that no EPG (electronic program guide) is provided during the vertical blanking interval, an EPG (electronic program guide) distributed through the Internet may be used. Alternatively, an EPG (electronic program guide) recorded on a transportable medium for distribution such as a CD-ROM may be used. In case of analog broadcasting, the occurrence of reception failure may be detected as a decrease in the reception level from the antenna.

The same or a similar program corresponding to a reserved program according to the invention indicates a program which has the same title as that of the reserved program and is broadcast in a timing later than that of the reserved program. That is, the same or a similar program is not restricted to a program that has the same title and the same contents.

The same or a similar program corresponding to a reserved program according to the invention may be a program that has the same title as that of the reserved program but has slightly different contents from that of the reserved program. That is, the same or a similar program may be a program similar to the reserved program.

This situation is described below with reference to an example of a relay broadcast of a baseball game. For example, on channel 200, a baseball game between baseball teams the Giants and the Tigers is relayed in live from 13:00 to 15:00 under the title "Relay of baseball game - Giants vs Tigers. " On channel 220, the same baseball game is relayed in record from 19:00 to 21:00 under the title "Relay of baseball game - Giants vs Tigers. " The announcer and the commentator in the relay on channel 200 are different from those on channel 220. In this case, in the program on channel 200 and the program on channel 220, the program titles are identical, and the baseball game relayed is the same. However, the announcer and the commentator in the relay are different in these channels. Accordingly, the program on channel 200 and the program on channel 220 are not completely the same but similar to each other. In this case, when the program on channel 200 was reserved and has suffered reception failure during the reception, the program on channel 220 may be automatically reserved as the second program as described above.

Describedbelow is another example of a similar program corresponding to a reserved program. On channel 240, a movie program having the title "the Titanic" is broadcast from 17:00 to 19:30. Further, on channel 260, a movie program having the title "the Titanic" is broadcast from 20:00 to 22:30. Each program is the television version of a theater movie "the Titanic." However, on channel 240, the voice is English, and superposition is provided in Japanese. In contrast, on channel 260, the voice is dubbed into Japanese. That is, although these two programs are the same movie "the Titanic," the voice on channel 240 is English, while the voice on channel 260 is Japanese. That is, the program on channel 240 and the program on channel 260 are not completely the same but similar to each other. In this case, when the program on channel 240 was reserved and has suffered reception failure during the reception, the program on channel 260 may be automatically reserved as the second program as described above. Thus, as seen from these two examples, two programs that the contents of which is partially different from each other may be considered as the same or similar programs.

Described below is further another example of a similar program corresponding to a reserved program. On channel 200, a program is broadcast. On channel 220, the same program is broadcast but together with commentary in finger language. In this case, when the program on channel 200 is the reserved program, the program on channel 220 is a similar program corresponding to the reserved program. As such, a program that has extra information, such as commentary in finger language, added to the original reserved program and is broadcast in another timing may be considered as a similar program corresponding to the original reserved program without extra information.

In short, the same or a similar program corresponding to a reserved program according to the invention may be the same program as the reserved program, or alternatively a similar program that has slightly different contents from that of the reserved program. That is, the scope of similarity herein includes the situation that the majority of the contents of programs is the same but that the entirety is not completely the same, and the situation that the contents of a program is composed of the contents of another program and additional information.

The above-mentioned embodiments of the invention have been described for the case that the same program as the reserved program is searched for using the title as a search key. However, the invention is not restricted to this. In place of using the title, a program having the same or similar detailed description of program included in the above-mentioned EPG may be selected. Here, the situation that the detailed description is the same indicates that the text data in the detailed description is the same. The situation that the detailed description is similar indicates the following situation. That is, a large number of search keys are defined in advance. In the search for the same or a similar program corresponding to the reserved program, the text data in the detailed description is divided into words. Then, when the search keys appearing in the set of the divided words are the same as those of the reserved program, the program under consideration is determined as the same or a similar program. As such, the same or a similar program corresponding to a reserved program according to the invention may be a program having the same or similar detailed description of program included in the EPG.

The above-mentioned embodiments of the invention have been described for the case that a program is reserved using an electronic program table shown in Figure 1. However, the invention is not restricted to this. The user may reserve a program using a program table in newspapers and magazines, or alternatively using another information such as a G-code capable of specifying a program.

The invention is a program that causes a computer to execute the operation of all or part of the steps (or processes, operations, effects, and the like) in the program reserving method according to the invention, and works in cooperation with the computer.

Part of the steps (or processes, operations, effects, and the like) according the invention indicates: a step or steps among a plurality of said steps; or alternatively, part of operation in a step.

The scope of the invention includes also a computer-readable recording medium in which a program according to the invention is recorded.

A mode of use of a program according to the invention may be that the program is recorded in a computer-readable recording medium and works in cooperation with a computer.

A mode of use of a program according to the invention may be that the program is transmitted through a transmitting medium, read out by a computer, and works in cooperation with the computer.

The scope of recording media according to the invention includes a ROM and the like, while the scope of transmitting media according to the invention includes a transmitting medium such as the Internet, as well as light, radio waves, acoustic waves, and the like.

Acomputer accordingto the invention is not restricted to genuine hardware such as a CPU, and may be firmware, an OS, and a peripheral device.

A configuration according to the invention may be implemented by software or hardware.

### INDUSTRIAL APPLICABILITY

As described above, the invention provides a program reserving apparatus, method, and program in which in case of the occurrence of failure during the reception of a reserved program, re-broadcasting of the same program is searched for and reserved, thereby the program is automatically re-receivedfor watching or recording without the necessity of manual operation. This reduces the occasions of missing a program and failing in recording caused by reception failure due to rains and the like.

## Claims

1. A program reserving apparatus comprising:
specifying means (201) of specifying a program to be reserved and thereby reserving said program by registering program reservation information containing at least information on the channel and the broadcast time and day of a reserved program;
detecting means (203) of detecting reception failure during the reception of said reserved program;
searching means (204) of searching for a program from among program information containing at least information on the channel and the broadcast time and day of broadcast programs;
reservation information controlling means (205) in which when said detecting means (203) has detected reception failure during the reception of said reserved program, said reservation information controlling means (205) controls said searching means (204) to search for the same or a similar program corresponding to said reserved program among said program information, and in which when the result of said search shows the presence of the same or a similar program corresponding to said reserved program, said reservation information controlling means (205) reserves said same or similar program automatically; and
linkage controlling means (609) of causing an external recording apparatus to operate on the basis of said program reservation information, wherein
when said detecting means (203) has detected reception failure during the reception of said reserved program, and when the result of said search by said searching means (204) shows the presence of the same or a similar program corresponding to said reserved program, said linkage controlling means (604) controls said recording apparatus to record said program having suffered the reception failure as far as the capacity of said recording apparatus permits.

2. A program reserving apparatus according to Claim 1, wherein when said recording apparatus has completed the recording of said same or similar program without reception failure detected by said detecting means during the reception of said same or similar program, said linkage controlling means controls said recording apparatus to delete said program having suffered the reception failure.

3. A program reserving apparatus according to Claim 1, wherein when said detecting means has detected reception failure during the reception of said same or similar program, and when the result of said search by said searching means shows the absence of the same or a similar program corresponding to said program having suffered the reception failure, said recording apparatus is controlled to record said program having suffered the reception failure as far as the capacity of said recording apparatus permits, and wherein
said recording apparatus is controlled to delete programs other than one program having suffered the least reception failure among the same programs having suffered reception failure and recorded in said recording apparatus,

4. A program reserving method comprising:
specifying step of specifying a program to be reserved and thereby reserving said program by registering program reservation information containing at least information on the channel and the broadcast time and day of a reserved program;
detecting step of detecting reception failure during the reception of said reserved program;
searching step of searching for a program from among program information containing at least information on the channel and the broadcast time and day of broadcast programs;
reservation information controlling step in which when reception failure has been detected at said detecting step during the reception of said reserved program, and said searching step is controlled to search for the same or a similar program corresponding to said reserved program among said program information, and in which when the result of said search shows the presence of the same or a similar program corresponding to said reserved program, said same or similar program is automatically reserved; and
linkage controlling step of causing an external recording apparatus to operate on the basis of said program reservation information, wherein
when reception failure has been detected at said detecting step during the reception of said reserved program, and when the result of said search by said searching step shows the presence of the same or a similar program corresponding to said reserved program, said recording apparatus is controlled to record said program having suffered the reception failure as far as the capacity of said recording apparatus permits by said linkage controlling step.

5. A program causing a computer to execute the following steps in the program reserving method according to Claim 4:
specifying step of specifying a program to be reserved and thereby reserving said program by registering program reservation information containing at least information on the channel and the broadcast time and day of a reserved program;
detecting step of detecting reception failure during the reception of said reserved program;
searching step of searching for a program from among program information containing at least information on the channel and the broadcast time and day of broadcast programs;
reservation information controlling step in which when reception failure has been detected at said detecting step during the reception of said reserved program, and said searching step is controlled to search for the same or a similar program corresponding to said reserved program among said program information, and in which when the result of said search shows the presence of the same or a similar program corresponding to said reserved program, said same or similar program is automatically reserved; and
linkage controlling step of causing an external recording apparatus to operate on the basis of said program reservation information.

## Patentansprüche

1. Programmreservierungsvorrichtung, die umfasst:
eine Spezifizierungseinrichtung (201), die ein zu reservierendes Programm spezifiziert und so das Programm reserviert, indem sie Programmreservierungs-Informationen registriert, die wenigstens Informationen über den Kanal und die Sendzeit sowie den Tag eines reservierten Programms enthalten;
eine Erfassungseinrichtung (203), die Empfangsfehler während des Empfangs des reservierten Programms erfasst;
eine Sucheinrichtung (204), die ein Programm aus Programminformationen sucht, die wenigstens Informationen über den Kanal sowie die Sendezeit und den Tag gesendeter Programme enthalten;
eine Reservierungsinformations-Steuereinrichtung (205), in der, wenn die Erfassungseinrichtung (203) Empfangsfehler während des Empfangs des reservierten Programms erfasst hat, die Reservierungsinformations-Steuereinrichtung (205) die Sucheinrichtung (204) so steuert, dass sie in den Programminformationen nach dem gleichen oder einem ähnlichen Programm, das dem reservierten Programm entspricht, sucht, und wobei, wenn das Ergebnis der Suche das Vorhandensein des gleichen oder eines ähnlichen Programms, das dem reservierten Programm entspricht, zeigt, die Reservierungsinformations-Steuereinrichtung (205) das gleiche oder ähnliche Programm automatisch reserviert; und
eine Verbindungs-Steuereinrichtung (609), die bewirkt, dass eine externe Aufzeichnungsvorrichtung auf Basis der Programm-Reservierungsinformationen arbeitet, wobei,
wenn die Erfassungseinrichtung (203) während des Empfangs des reservierten Programms Empfangsfehler erfasst hat und wenn das Ergebnis der Suche durch die Sucheinrichtung (204) das Vorhandensein des gleichen oder eines ähnlichen Programms, das dem reservierten Programm entspricht, zeigt, die Verbindungs-Steuereinrichtung (609) die Aufzeichnungsvorrichtung so steuert, dass sie das Programm, das den Empfangsfehler erlitten hat, so weit aufzeichnet, wie dies die Kapazität der Aufzeichnungsvorrichtung zulässt.

2. Programmreservierungsvorrichtung nach Anspruch 1, wobei, wenn die Aufzeichnungsvorrichtung das Aufzeichnen des gleichen oder eines ähnlichen Programms ohne durch die Erfassungseinrichtung während des Empfangs des gleichen oder eines ähnlichen Programms erfassten Empfangsfehler abgeschlossen hat, die Verbindungs-Steuereinrichtung die Aufzeichnungsvorrichtung so steuert, dass sie das Programm löscht, das den Empfangsfehler erlitten hat.

3. Programmreservierungsvorrichtung nach Anspruch 1, wobei, wenn die Erfassungseinrichtung Empfangsfehler während des Empfangs des gleichen oder eines ähnlichen Programms erfasst hat und wenn das Ergebnis der Suche durch die Sucheinrichtung das Nichtvorhandensein des gleichen oder eines ähnlichen Programms, das dem Programm entspricht, das den Empfangsfehler erlitten hat, zeigt, die Aufzeichnungsvorrichtung so gesteuert wird, dass sie das Programm, das den Empfangsfehler erlitten hat, soweit aufzeichnet, wie dies die Kapazität der Aufzeichnungsvorrichtung zulässt, und wobei
die Aufzeichnungsvorrichtung so gesteuert wird, dass sie von den gleichen Programmen, die Empfangsfehler erlitten haben und in der Aufzeichnungsvorrichtung aufgezeichnet sind, andere Programme als das eine Programm, das den geringsten Empfangsfehler erlitten hat, löscht.

4. Programmreservierungsverfahren, das umfasst:
einen Spezifizierungsschritt, mit dem ein zu reservierendes Programm spezifiziert wird und so das Programm reserviert wird, indem Programm-Reservierungsinformationen registriert werden, die wenigstens Informationen über den Kanal und die Sendezeit sowie den Tag eines reservierten Programms enthalten;
einen Erfassungsschritt, mit dem Empfangsfehler während des Empfangs des reservierten Programms erfasst werden;
einen Suchschritt, mit dem ein Programm aus Programminformationen gesucht wird, die wenigstens Informationen über den Kanal und die Sendezeit sowie den Tag gesendeter Programmen enthalten;
einen Reservierungsinformations-Steuerschritt, wobei, wenn der Empfangsfehler in dem Erfassungsschritt während des Empfangs des reservierten Programms erfasst worden ist, der Suchschritt so gesteuert wird, dass in den Programminformationen nach dem gleichen oder einem ähnlichen Programm, das dem reservierten Programm entspricht, gesucht wird, wobei, wenn das Ergebnis der Suche das Vorhandensein des gleichen oder eines ähnlichen Programms, dass den reservierten Programmen entspricht, zeigt, das gleiche oder ähnliche Programm automatisch reserviert wird; und
einen Verbindungs-Steuerschritt, der eine externe Aufzeichnungsvorrichtung veranlasst, auf Basis der Programm-Reservierungsinformationen zu arbeiten, wobei
wenn der Empfangsfehler in dem Erfassungsschritt während des Empfangs des reservierten Programms erfasst worden ist und wenn das Ergebnis der Suche mit dem Suchschritt das Vorhandensein des gleichen oder eines ähnlichen Programms zeigt, das dem reservierten Programm entspricht, die Aufzeichnungsvorrichtung mit dem Verbindungs-Steuerschritt so gesteuert wird, dass sie das Programm, das den Empfangsfehler erlitten hat, so weit aufzeichnet, wie dies die Kapazität der Aufzeichnungsvorrichtung zulässt.

5. Programm, das einen Computer veranlasst, die folgenden Schritte in dem Programmreservierungsverfahren nach Anspruch 4 auszuführen:
einen Spezifizierungsschritt, mit dem ein zu reservierendes Programm spezifiziert wird und so das Programm reserviert wird, indem Programm-Reservierungsinformationen registriert werden, die wenigstens Informationen über den Kanal und die Sendezeit und den Tag eines reservierten Programms enthalten;
einen Erfassungsschritt, mit dem Empfangsfehler während des Empfangs des reservierten Programms erfasst wird;
einen Suchschritt, mit dem nach einem Programm aus Programminformationen gesucht wird, die wenigstens Informationen über den Kanal und die Sendezeit sowie den Tag gesendeter Programmen enthalten;
einen Reservierungsinformations-Steuerschritt, in dem, wenn in dem Erfassungsschritt während des Empfangs des reservierten Programms Empfangsfehler erfasst worden sind, der Suchschritt so gesteuert wird, dass er in den Programminformationen nach dem gleichen oder einem ähnlichen Programm, das dem reservierten Programm entspricht, sucht, und wobei, wenn das Ergebnis der Suche das Vorhandensein des gleichen oder eines ähnlichen Programms anzeigt, das dem reservierten Programm entspricht, das gleiche oder ähnliche Programm automatisch reserviert wird; und
einen Verbindungs-Steuerschritt, der eine externe Aufzeichnungsvorrichtung veranlasst, auf Basis der Programm-Reservierungsinformationen zu arbeiten.

## Revendications

1. Dispositif de réservation de programmes comprenant:
un moyen de spécification (201) pour spécifier un programme à réserver et réserver ainsi ledit programme en enregistrant une information de réservation de programme contenant au moins une information sur le canal et l'heure et le jour de diffusion d'un programme réservé;
un moyen de détection (203) pour détecter un échec de réception lors de la réception dudit programme réservé;
un moyen de recherche (204) pour rechercher un programme parmi une information de programme contenant au moins une information sur le canal et l'heure et le jour de diffusion de programmes diffusés;
un moyen de commande d'information de réservation (205) dans lequel lorsque ledit moyen de détection (203) a détecté un échec de réception lors de la réception dudit programme réservé, ledit moyen de commande d'information de réservation (205) commande ledit moyen de recherche (204) pour rechercher le même programme ou un programme similaire correspondant audit programme réservé parmi ladite information de programme, et dans lequel lorsque le résultat de ladite recherche montre la présence du même programme ou d'un programme similaire correspondant audit programme réservé, ledit moyen de commande d'information de réservation (205) réserve automatiquement ledit même programme ou ledit programme similaire; et
un moyen de commande de liaison (609) pour amener un dispositif d'enregistrement externe à fonctionner sur la base de ladite information de réservation de programme, où
lorsque ledit moyen de détection (203) a détecté un échec de réception lors de la réception dudit programme réservé, et lorsque le résultat de ladite recherche par ledit moyen de recherche (204) montre la présence du même programme ou d'un programme similaire correspondant audit programme réservé, ledit moyen de commande de liaison (604) commande ledit dispositif d'enregistrement pour enregistrer ledit programme ayant subi l'échec de réception tant que la capacité dudit dispositif d'enregistrement le permette.

2. Dispositif de réservation de programmes selon la revendication 1, dans lequel lorsque ledit dispositif d'enregistrement a terminé l'enregistrement dudit même programme ou dudit programme similaire sans un échec de réception détecté par ledit moyen de détection lors de la réception dudit même programme ou dudit programme similaire, ledit moyen de commande de liaison commande ledit dispositif d'enregistrement pour effacer ledit programme ayant subi l'échec de réception.

3. Dispositif de réservation de programmes selon la revendication 1, dans lequel lorsque ledit moyen de détection a détecté un échec de réception lors de la réception dudit même programme ou dudit programme similaire, et lorsque le résultat de ladite recherche par ledit moyen de recherche montre l'absence du même programme ou d'un programme similaire correspondant audit programme ayant subi l'échec de réception, ledit dispositif d'enregistrement est commandé pour enregistrer ledit programme ayant subi l'échec de réception tant que la capacité dudit dispositif d'enregistrement le permette, et où
ledit dispositif d'enregistrement est commandé pour effacer des programmes autres qu'un programme ayant subi le moindre échec de réception parmi les mêmes programmes ayant subi un échec de réception et enregistrés dans ledit dispositif d'enregistrement.

4. Procédé de réservation de programmes comprenant:
une étape de spécification pour spécifier un programme à réserver et réserver ainsi ledit programme en enregistrant une information de réservation de programme contenant au moins une information sur le canal et l'heure et le jour de diffusion d'un programme réservé;
une étape de détection pour détecter un échec de réception lors de la réception dudit programme réservé;
une étape de recherche pour rechercher un programme parmi une information de programme contenant au moins une information sur le canal et l'heure et le jour de diffusion de programmes diffusés;
une étape de commande d'information de réservation dans laquelle lorsqu'un échec de réception a été détecté à ladite étape de détection lors de la réception dudit programme réservé, et ladite étape de recherche est commandée pour rechercher le même programme ou un programme similaire correspondant audit programme réservé parmi ladite information de programme, et dans laquelle lorsque le résultat de ladite recherche montre la présence du même programme ou d'un programme similaire correspondant audit programme réservé, ledit même programme ou ledit programme similaire est automatiquement réservé; et
une étape de commande de liaison pour amener un dispositif d'enregistrement externe à opérer sur la base de ladite information de réservation de programme, où
lorsqu'un échec de réception a été détecté à ladite étape de détection lors de la réception dudit programme réservé, et lorsque le résultat de ladite recherche par ladite étape de recherche montre la présence du même programme ou d'un programme similaire correspondant audit programme réservé, ledit dispositif d'enregistrement est commandé pour enregistrer ledit programme ayant subi l'échec de réception tant que la capacité dudit dispositif d'enregistrement le permette par ladite étape de commande de liaison.

5. Programme amenant un ordinateur à effectuer les étapes suivantes dans le procédé de réservation de programmes selon la revendication 4;
une étape de spécification pour spécifier un programme à réserver et réserver ainsi ledit programme en enregistrant une information de réservation de programme contenant au moins une information sur le canal et l'heure et le jour de diffusion d'un programme réservé;
une étape de détection pour détecter un échec de réception lors de la réception dudit programme réservé;
une étape de recherche pour rechercher un programme parmi une information de programme contenant au moins une information sur le canal et l'heure et le jour de diffusion de programmes diffusés;
une étape de commande d'information de réservation dans laquelle lorsqu'un échec de réception a été détecté à ladite étape de détection lors de la réception dudit programme réservé, et ladite étape de recherche est commandée pour recherche le même programme ou un programme similaire correspondant audit programme réservé parmi ladite information de programme, et dans laquelle lorsque le résultat de ladite recherche montre la présence du même programme ou d'un programme similaire correspondant audit programme réservé, ledit même programme ou ledit programme similaire est automatiquement réservé; et
une étape de commande de liaison pour amener un dispositif d'enregistrement externe à opérer sur la base de ladite information de réservation de programme.
